# EUROPÄISCHE PATENTSCHRIFT

(11) **EP 2 201 414 B1**
(45) Veröffentlichungstag und Bekanntmachung des Hinweises auf die Patenterteilung: **27.07.2016**
(21) Anmeldenummer: 08842822.2
(22) Anmeldetag: 24.10.2008
(51) Int. Cl.: B60Q 1/56, F21V 8/00, B60R 13/10

(54) **LEUCHTOBJEKT**
ILLUMINATION OBJECT
ARTICLE D'ÉCLAIRAGE

(30) Priorität: 25.10.2007 AT 17382007
(43) Veröffentlichungstag der Anmeldung: 30.06.2010
(73) Patentinhaber: Schoenberg Elumic GmbH, 1150 Wien (AT)
(72) Erfinder: CZAK, Christian, A-1130 Wien (AT); NOVOTNY, Manfred, A-1110 Wien (AT)
(74) Vertreter: Puchberger, Peter
(86) Internationale Anmeldenummer: PCT/EP2008/008999
(87) Internationale Veröffentlichungsnummer: WO 2009/053082

(56) Entgegenhaltungen:
- EP-A1- 1 193 511
- DE-A1-102004 031 796
- DE-A1-102005 041 490
- US-A- 5 786 665
- US-A1- 2003 016 930
- US-A1- 2005 276 566

## Beschreibung

Die Erfindung betrifft ein Leuchtobjekt gemäß Oberbegriff des Anspruchs 1 und Verfahrensanspruch 20.

Die vorliegende Erfindung hat das Ziel, auf einfache und kostengünstige Weise

Leuchtobjekte herzustellen, bei denen das Leuchtmittel im Leuchtkörper integriert ist und das Licht an gewünschten Stellen oder Flächen des Leuchtobjektes austreten kann. Die Form solcher Leuchtobjekte soll beliebig gewählt werden können, da sie in vielfältigen Anwendungsgebieten vorkommen, ist aber im wesentlichen flach wie eine Platte, wie z.B. Schilder aller Art. Ein besonderes Anwendungsgebiet von Leuchtobjekten wären beleuchtete Schilder wie KFZ-Nummerntafeln und dergleichen.

Es kann auch erstrebenswert sein, die Leuchtobjekte mit Licht unterschiedlicher Farben auszustatten. Durch das Licht können im oder am Leuchtobjekt Schriften angezeigt, sowie Flächen farbig oder weiß beleuchtet werden, Bevorzugt soll der gesamte Körper gleichmäßig ausgeleuchtet werden.

Anwendungsgebiete für Leuchtobjekte sind neben den KFZ-Nummerntafeln für Fahrzeuge auch Hinweisschilder, Werbetafeln, Beleuchtungsteile im Automobilbau, Gehäuse von elektrischen Geräten, Bilderrahmen, Uhrgehäuse oder Armbänder, Sicherheitsprodukte wie z.B. Warndreiecke, Schultaschen oder Fluchtwegsicherungen. Beleuchtbar wären auch Tasten oder Gehäuse von elektronischen Geräten, aber auch Kleidungsstücke oder Schuhe. Diese Aufzählung ist nur beispielhaft und es gibt für die Anwendungsgebiete kaum eine Beschränkung. Allerdings war es bisher nicht möglich, diese vielfältigen Anwendungsgebiete zu nutzen, da entweder die Leuchtmittel eine so vielfältige Verwendung in auch dünnen

Leuchtobjekten nicht zuließen, oder weil der Einbau von Leuchtmittel in die Leuchtobjekte teuer oder aufwendig war.

Mit der vorliegenden Erfindung werden die obigen Nachteile vermieden und neue Anwendungsgebiete für Leuchtobjekte erschlossen.

Aus der DE 10 2005 041 490 A1 ist es bekannt geworden, Leuchtdioden in eine Kunststoffplatte zu hinterspritzen oder in diese einzubetten. Dies allerdings mit dem Ziel, die punktförmige Lichtabstrahlung der LEDs beizubehalten. Es ist nicht vorgesehen, die Kunststoffplatte so zum Leuchten zu bringen, dass die punktförmige Strahlung der LEDs möglichst verschwindet. Eine gleichförmige Ausleuchtung eines plattenförmigen Leuchtobjektes mit Anordnung der LEDs möglichst nur im Randbereich des Objektes ist damit nicht möglich.

Aus der US 2003/0016930 A1 ist ein Leuchtobjekt mit mehreren LEDs bekannt, wobei die LEDs auf einem Stromleiter angeordnet sind und derart angeordnet sind, dass das Licht der LEDs in einen Leuchtkörper abgestrahlt wird, wobei zur gleichmäßigen Ausleuchtung des Leuchtkörpers Reflexionspunkte vorgesehen sind, die derart angeordnet sind, dass der Leuchtkörper an seiner Vorderseite gleichmäßig beleuchtbar ist.

Weitere gattungsgemäße Leuchtobjekte sind aus den Druckschriften DE 2004 031 796 A1 sowie EP 1 193 511 A1, US5786665 und US2005/0276566 bekannt.

Ziel der Erfindung ist es, bevorzugt plattenförmige Leuchtobjekte vorzusehen, die eine flächige Lichtabstrahlung an der/ den Vorderseite(n) des Leuchtobjektes an gewünschten Stellen und in gewünschter Intensität erlaubt. Die Leuchtobjekte sollen auch verformbar sein, um z.B. Buchstaben und Ziffern auf vorstehenden Prägungen anordnen zu können.

Die vorliegende Erfindung ist dadurch gekennzeichnet, dass die LEDs mit dem Stromleiter in einem plattenförmigen Leuchtkörper aus Kunststoff eingeschmolzen sind, wobei der Leuchtkörper an seiner Rückseite reflektierend ausgebildet ist und die Rückseite des Leuchtkörpers mit Reflexionspunkten versehen ist, wobei die Reflexionspunkte auf einer Rückenfolie angeordnet sind, die auf der Rückseite des Leuchtkörpers angeordnet und fixiert wird.

Der Stromleiter kann ein zwei- oder mehrädriges Flachkabel sein, auf oder zwischen dessen Leiterbahnen die LEDs befestigt und kontaktiert sind. Das Flachkabel kann als Isolator und Kabelkörper einen Kunststoff umfassen, der mit dem Kunststoff des Leuchtkörpers kompatibel ist. Nach einem weiteren Merkmal der Erfindung ist das Leuchtmittel in den Leuchtkörper aus thermoplastischen Kunststoff mittels Spritzguss zumindest teilweise eingeschmolzen. Vorteilhafte Merkmale sind den Ansprüchen, den Zeichnungen und der Beschreibung zu entnehmen.

Die Leuchteigenschaften der Leuchtobjekte werden durch mehrere Maßnahmen beeinflusst. Zum Einen ist die Anordnung der Leuchtmittel innerhalb des Leuchtkörpers wichtig. Diese Anordnung bestimmt, von welchen Stellen aus das Licht in den Leuchtkörper abgegeben wird, wobei die Gebiete der Anordnung des Leuchtmittels einer nur beschränkten mechanischen und thermischen Umformung unterliegen dürfen. Die Wahl der LEDs bestimmt die Art und Farbe des ausgesendeten Lichtes.

Die weiteren Maßnahmen der Formgebung des Leuchtkörpers und die Maßnahmen der Oberflächengestaltung beeinflussen in weiterer Folge den Strahlengang des Lichtes und die gesamten lichttechnischen Eigenschaften des Leuchtobjektes.

Beispielsweise kann die Oberfläche des Leuchtkörpers mit reflektierenden, spiegelnden, lichtstreuenden und/oder lichtabdeckenden Schichten oder Oberflächengestaltungen versehen sein. Der Leuchtkörper selber kann lichtlenkende oder lichtstreuende Einschlüsse beinhalten. Nähere Details zu diesen verschiedenen Ausführungen werden weiter unten in der näheren Beschreibung der Erfindung geoffenbart.

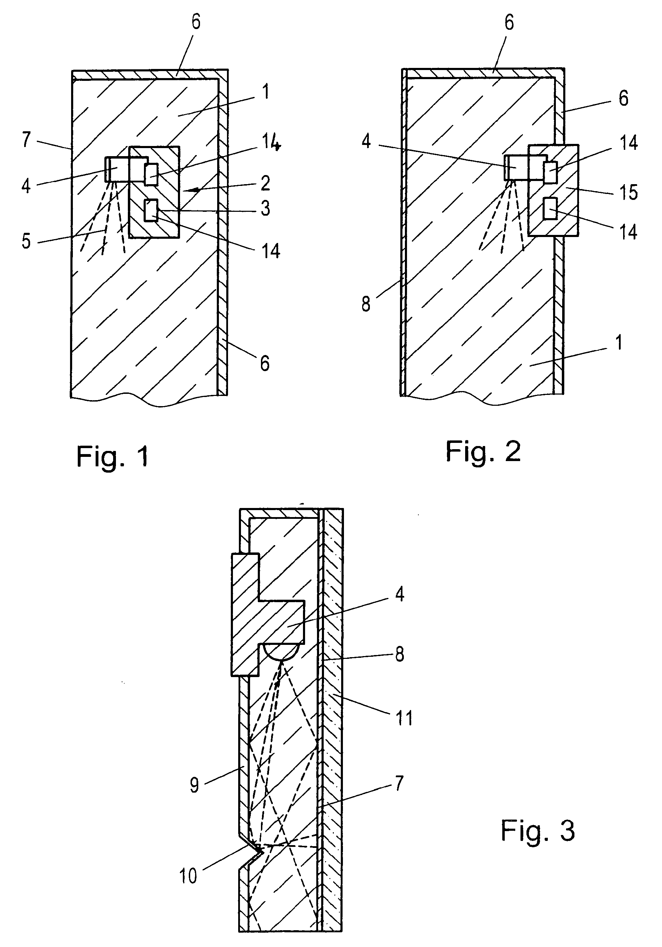

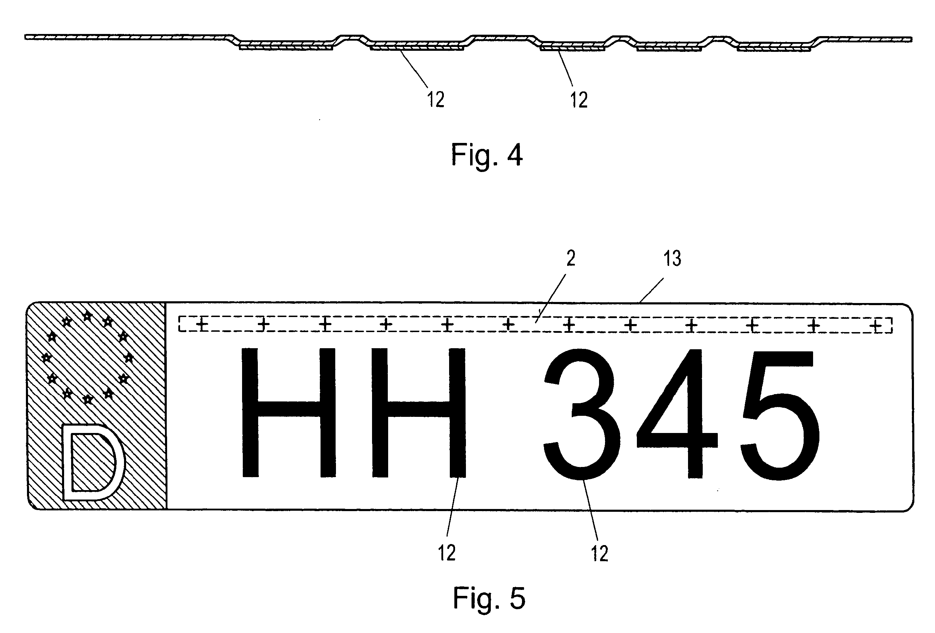

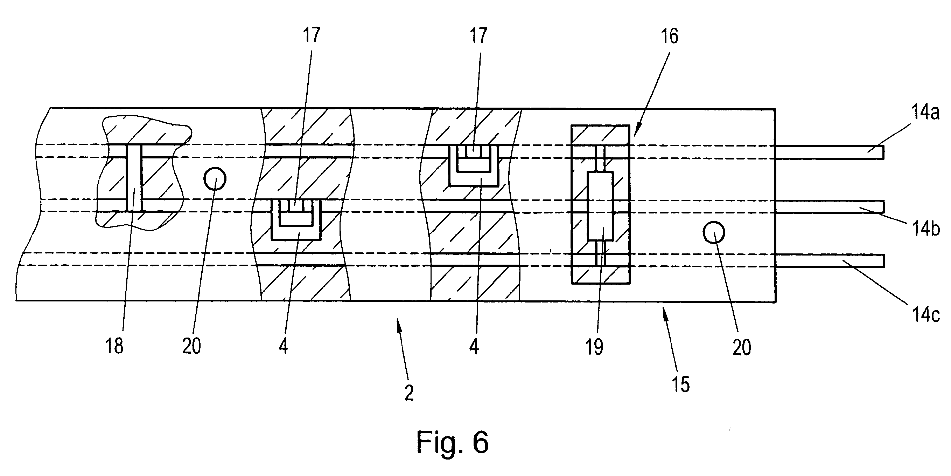

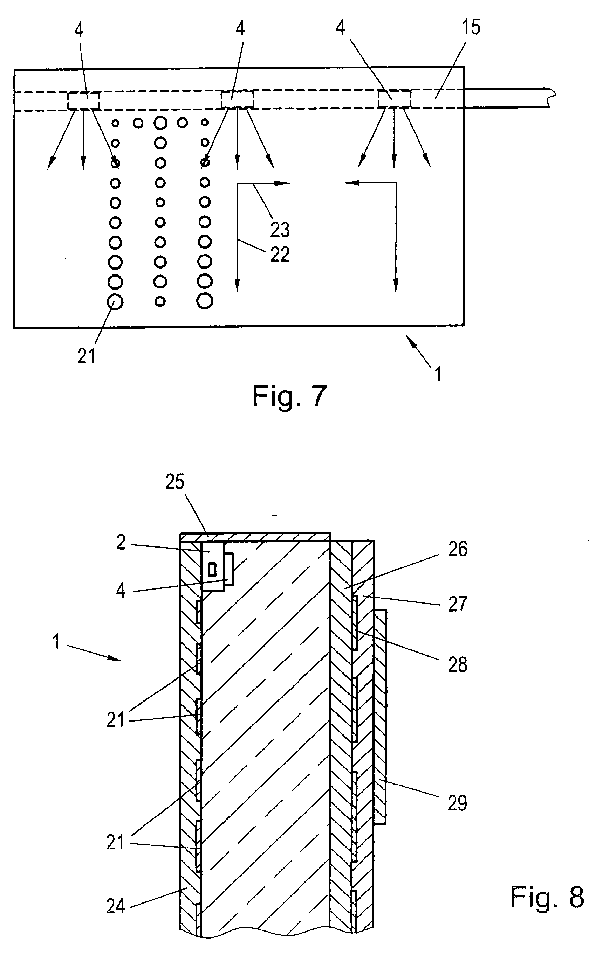

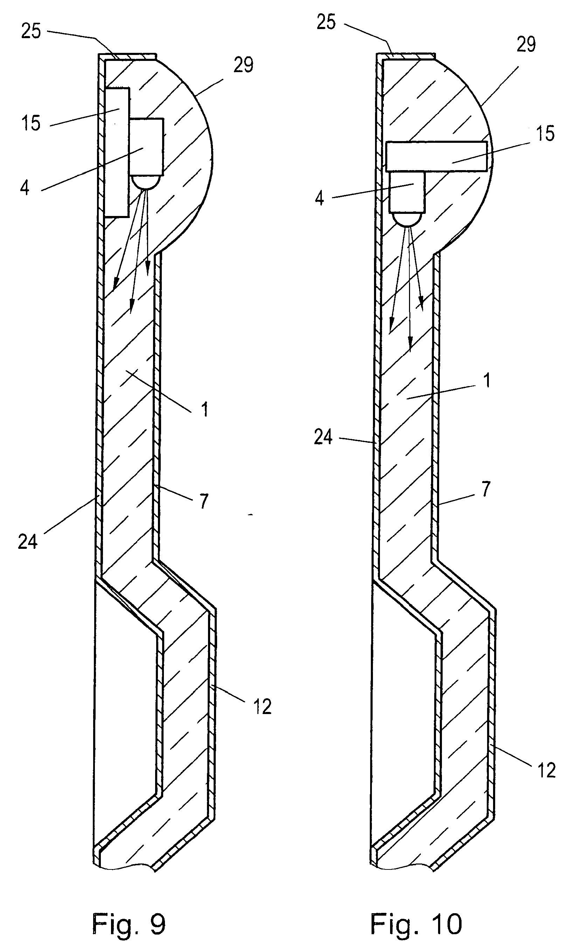

Die Fig. 1, 2 und 3 zeigen Schnitte durch erfindungsgemäße Leuchtobjekte in verschiedenen Ausführungsformen. Fig. 4 zeigt einen Längsschnitt durch ein Leuchtobjekt in Form einer Fahrzeugkennzeichentafel und Fig. 5 zeigt die Aufsicht auf diese Tafel. Fig. 6 ist eine Ansicht eines Abschnittes des Leuchtmittels, Fig. 7 eine schematische Ansicht eines Leuchtobjektes und Fig. 8 ein Schnitt durch ein Leuchtobjekt. Die Figur 9 und 10 zeigen eine Ausbildung des Randbereiches eines Leuchtobjektes.

Die Fig. 1 und 2 demonstrieren, wie die Leuchtmittel in einem Leuchtkörper aus Kunststoff eingebettet sein können. Die Form des Leuchtobjektes ist hier eine rechteckige Platte, die in der Zeichnung jeweils unten abgeschnitten und im Querschnitt dargestellt ist. Die Form des Leuchtobjektes ist aber nicht auf diese einfache Form beschränkt, sondern kann jede beliebige Form eines Objektes darstellen z.B. auch kugelförmig oder unregelmäßig. Gemäß Erfindung kann jede dreidimensionale Form eines Leuchtobjektes beleuchtet werden, sofeme die erfindungsgemäßen Merkmale angeordnet werden können.

Gemäß Fig. 1 umfasst das Leuchtobjekt einen Leuchtkörper 1 aus durchsichtigem oder transparentem Kunststoff. In den Leuchtkörper 1 ist das Leuchtmittel 2 eingeschmolzen. Das Leuchtmittel besteht aus einem Stromleiter 3, auf dem hintereinander als Lichtquelle LEDs 4 angeordnet sind. Der Stromleiter besteht in diesem Ausführungsbeispiel aus einem zweiädrigen Flachkabel. Durch an sich bekannte Bearbeitungsmethoden wie Stanzen oder Laserbearbeitung können die Leitungsbahnen 14 des Stromleiters an den geeigneten Stellen unterbrochen und mittels ebenfalls bekannter Montagetechniken die LEDs zur Überbrückung aufgelötet werden. Der Stromleiter mit den LEDs kann aber auch aus Kabeln mit herkömmlicher Montagetechnik ausgebildet sein oder als Streifen einer gedruckten Schaltung, auf der die LEDs aufgelötet werden. Die Länge des Leuchtmittels hängt selbstverständlich von der gewünschten Länge der Beleuchtung und von der Art des Leuchtkörpers ab.

In Fig. 1 ist das Leuchtmittel 2 zur Gänze eingeschmolzen und daher allseitig vom Leuchtkörper 1 umschlossen.

In dem Ausführungsbeispiel gemäß Fig. 2 sitzt das Leuchtmittel 2 entlang einer der Flächen des Leuchtobjektes, wobei der Leuchtkörper 1 nur auf jener Seite des Leuchtmittels aufgeschmolzen ist, an der die LEDs sitzen. Die von den LEDs abgestrahlten Lichtstrahlen sind mit dem Bezugszeichen 5 angedeutet.

Um den Lichtaustritt des vom Leuchtmittel 2 abgestrahlten Lichtes in gewünschtem Ausmaß zu beeinflussen, ist der Leuchtkörper 1 mit entsprechenden Oberflächen versehen. Der obere Rand und die rechte Rückseite sind mit einer Reflexionsschicht 6 versehen, welche die Lichtstrahlen von den Oberflächen in den Leuchtkörper 1 zurücklenkt. Damit wird verhindert, dass Lichtenergie vergeudet wird und es tritt nur dort Licht aus, wo es gewünscht ist.

In Fig. 1 ist die Vorderfläche 7 einfach die Begrenzungsfläche des Leuchtkörpers. Dort tritt somit das Licht ungehindert aus und strahlt aus dem Leuchtkörper 1 nach vorne ab.

In Fig. 2 ist die Vorderfläche 7 mit einer Diffusionsschicht 8 versehen, um den Lichtaustritt durch die Vorderfläche 7 im gewünschten Maß zu steuern. Diese Diffusionsschicht 8 kann z.B. eine spiegelnde oder die Lichtstrahlen zumindest teilweise rückstrahlende Schicht sein, die durch rasterförmige Aufbringung gezielt teildurchlässig gemacht ist. Der Lichtaustritt kann auch durch die Dünnheit der Schicht gesteuert werden oder durch das aufgebrachte Material oder Oberflächengestaltung wie z.B. Aufrauen. Verschiedene Flächenabschnitte können verschiedene Abstrahlcharakteristika und verschiedene Färbung aufweisen.

Die Fig. 3 zeigt auf der Rückseite eine Reflexionsschicht 9 und zusätzlich Einprägungen oder Einkerbungen 10, die dazu dienen, das von den LEDs 4 abgestrahlte Licht an den gewünschten Stellen nach vorne in Richtung zur Vorderfläche 7 zu strahlen. Statt der Einkerbungen können auch Brechungskörper angeordnet sein, die einen Brechungsindex haben, der verschieden von jenem des Leuchtkörpermaterials 1 ist. Mit der rückseitigen Verspiegelung und Anordnung von Brechungskörpern oder Einkerbungen ist es möglich, das Licht im Leuchtkörper auch dann weiterzuleiten, wenn der Leuchtkörper dreidimensional gebogen ist, wie dies beispielsweise bei geprägten Leuchtschildern der Fall ist.

In dem Ausführungsbeispiel nach Fig. 3 ist an der Vorderfläche 7 ebenfalls eine Diffusionsschicht 8 vorgesehen und dieser ist eine retroreflektierende Schicht 11 vorangestellt, die dazu dient, z.B. bei Verkehrsschildern oder Fahrzeugkennzeichentafeln das auftreffende Fremdlicht in geeigneter Weise zurückzustrahlen, wodurch ein Rückstrahleffekt entsteht.

Die Fig. 4 zeigt einen Leuchtkörper in Form einer sehr dünnen Platte, wie sie z.B. für Fahrzeugkennzeichentafeln zum Prägen der Kennzeichennummern vorgesehen werden kann. Derartige Tafeln sind etwa 1-2mm dick. Im Querschnitt entspricht die Anordnung etwa jener der Fig. 3. Die Stärke des Leuchtkörpers muss so bemessen sein, dass die LEDs 4 entlang des streifenförmigen Leuchtmittels Platz finden, sodass die LEDs komplett im Leuchtkörper eingeschmolzen sind. In Fig. 4 sind auch die nachträglich eingepressten Prägungen im Bereich der Buchstaben und Ziffern der Kennzeichentafel zu sehen. Als schwarze Balken sind die auf den Prägungen aufgetragenen Buchstaben und Ziffern 12 eingezeichnet. Das streifenförmige Leuchtmittel 2 ist entlang der oberen Kante 13 des Leuchtobjektes angeordnet und die Positionen der LEDs sind mit Kreuzen angedeutet. Selbstverständlich können statt des einen streifenförmigen Leuchtmittels auch mehrere Leuchtmittel im Leuchtkörper eingeschmolzen sein, um eine vollständige Ausleuchtung zu gewährleisten. Die LEDs können verschiedenfärbig und individuell angesteuert sein, wodurch Lichteffekte und verschiedenfärbig beleuchtete Flächen herstellbar sind. Verschiedenfärbige Ansteuerung kann z.B. verschiedene Betriebszustände darstellen, was beispielsweise bei beleuchteten Bedienungstafeln wichtig sein kann.

Die erfindungsgemäßen Leuchtobjekte können auch an der Oberfläche mit Bedienungselementen wie Tasten versehen werden oder es können entsprechende Ausnehmungen durch den Leuchtkörper hindurch vorgesehen werden, um Tastenfelder oder Einzeltasten anzuordnen, um eine Bedienung zu erlauben.

Sehr vorteilhaft für die Herstellung der erfindungsgemäßen Leuchtobjekte ist die Möglichkeit, die Technik des Hinterspritzens zu verwenden. Dabei wird das Leuchtmittel in vorgefertigter Form in eine Spritzgussform eingelegt und nach Schließen der Form der Spritzgusskunststoff eingespritzt. Als Spritzgussmaterial eignet sich jedes Kunststoffmaterial, das bei den zulässigen Temperaturen fließfähig genug ist, um das Leuchtmittel mit Schmelze zu umhüllen. Weiters muss der Spritzgusskunststoff nach dem Erhärten die notwendigen Eigenschaften des Leuchtkörpers aufweisen, wie z.B. nötige Transparenz und Lichtleitfähigkeit innerhalb des Leuchtkörpers. Ein bevorzugtes Material ist Polycarbonatkunststoff. Ein Beispiel für einen solchen Kunststoff ist PC Tarflon IR 1700 glasklar.

Das Material für den Kabelkörper, der die Leiterbahnen 14 isolierend umgibt, soll bevorzugt kompatibel mit dem Spritzgussmaterial für den Leuchtkörper sein. Ein Beispiel für solches Material ist TPU, welches sehr gute Verbindungseigenschaften mit Polycarbonat hat.

Es versteht sich von selbst, dass die Temperaturen für den Hinterspritzungsvorgang dem Spritzgussmaterial angepasst sein müssen, wobei die Temperaturen auch für die LEDs 4 und den Kabelkörper 15 verträglich sein müssen. Bei geschmolzenem Polycarbonat liegt die Temperatur etwa zwischen 290°C und 320°C. Mit anderen Thermoplasten sind niedrigere Temperaturen erreichbar. Vorteile der erfindungsgemäßen Leuchtobjekte liegen auch darin, dass die Lichtquellen eine hohe Lebensdauer haben, dass beliebige Farben gewählt werden können und dass die Lichtquellen untrennbar mit dem Leuchtobjekt verbunden sind, sodass sie vor unerwünschten Manipulationen geschützt sind. Weiters haben diese erfindungsgemäßen Leuchtobjekte einen geringen Stromverbrauch bei hoher Effektivität. Derartige Leuchtobjekte können auch an Stellen eingesetzt werden, die sonst nur schwer zugänglich sind. Das Auswechseln von Lämpchen ist nicht nötig und auch nicht möglich, sodass die Leuchtobjekte nicht zugänglich sein müssen.

Durch das Eingießen der LEDs in den Kunststoffkörper ist die gemeinsame mechanische Festigkeit sehr groß und ein Ausfall durch mechanische Belastungen, z.B. beim Transport, fast unmöglich. Dies ist wesentlicher Vorteil und überraschend, weil Hersteller von elektronischen Teilen bis heute mit vielen Reklamationen durch Frühausfälle wie Unterbrechung der LED Kontaktstellen zu kämpfen haben.

Je nach Größe des Kunststoffkörpers und der benötigten Elektronik kann es vorteilhaft sein, auch die Elektronik in den Kunststoffkörper im Spritzguss einzuschließen.

Der Stromanschluss für das Leuchtmittel erfolgt bevorzugt dadurch, dass das Leuchtmittel mit seinen Leiterbahnen aus dem Leuchtkörper herausgeführt ist und das Ende des Stromleiters mit einem Stecker versehen ist.

Die Beschichtungen des Leuchtobjektes können beispielsweise durch Lackieren, Beschichten oder ähnliche Verfahren aufgebracht werden. Für das Hinterspritzen sind entsprechende Folien erhältlich, auf die das Kunststoffspritzmaterial aufgespritzt werden kann. Die Zweifarben-Spritzgusstechnologie ist ebenfalls gut geeignet, um lichtführende, spiegelnde, streuende oder reflektierende Zonen durch unterschiedliche Kunststoffe zu schaffen. Weiters kann es vorteilhaft sein, die Oberfläche des Leuchtkörpers mit einer Farbfolie bzw. mit einer bereits bedruckten Folie im "in mould dekor" Verfahren herzustellen. Damit können die Oberflächen dekorativ gestaltet werden, inklusive der Anordnung des Leuchtmittels. Gleichzeitig können die Reflexionsschichten bzw. Begrenzungsschichten beim gleichen Spritzgussvorgang angeordnet werden. Die Einkerbungen 10 können verschiedene Formen haben wie z.B. Pyramiden-, Kugel- oder Kegelform. Um die Abnahme der Helligkeit mit dem Abstand zur Lichtquelle auszugleichen, ist es vorteilhaft, mit zunehmender Entfernung von der Lichtquelle die Anzahl der spiegelnden Einkerbungen zunehmen zu lassen, sodass auf der jeweiligen Sichtseite des Leuchtobjektes eine gleichmäßige Helligkeit aufscheint. Im Nahebereich zur Lichtquelle kann es hingegen vorteilhaft sein, eine zu hohe Lichtintensität abzublenden.

Der Kabelkörper kann so im Leuchtkörper angeordnet werden, dass er als Blende wirkt.

Anhand der Fig. 6 wird erklärt, wie das Leuchtmittel bevorzugt aufgebaut und hergestellt ist. Es umfasst ein Flachkabel 15, welches im vorliegenden Ausführungsbeispiel drei Stromleiter 14a, 14b und 14 c aufweist. Im Rohzustand werden die Stromleiter über die gesamte Länge vom Isolator 16 eingehüllt. Das bevorzugte Flachkabel weist einen Isolator auf, dessen Material kompatibel mit dem Kunststoffmaterial des Leuchtkörpers 1 ist, sodass es beim Hinterspritzen zu einer festen Verbindung zwischen dem Leuchtkörper und dem Flachkabel kommt.

Das Flachkabel kann eine der Anwendung entsprechende Farbe haben z.B. schwarz, um das Leuchtmittel nach einer Seite des Leuchtobjekts hin abzudecken. Das Flachkabel kann aber auch eine andere Farbe aufweisen oder durchsichtig sein.

Das Flachkabel wird in einem vorbereitenden Verarbeitungsschritt bevorzugt mit einem Laser strukturiert. Strukturieren heißt in diesem Zusammenhang, dass an entsprechenden Stellen der isolierende Kunststoff entfernt wird und dass an gewünschten Stellen die Leiterbahnen aufgetrennt werden. Auftrennungen sind in Fig. 6 mit dem Bezugszeichen 17 versehen. Die Auftrennungen 17 werden durch die LEDs 4 überbrückt, sodass bei Anlegen einer Spannung an den zugehörigen Stromleiter die LEDs zum Leuchten beginnen.

An anderen Stellen kann z.B. eine Leiterbrücke 18 vorgesehen sein. Überdies können auch elektronische Bauteile angeordnet werden, wie beispielsweise ein Kondensator 19. Es können solche elektronischen Bauteile im Verlauf des einzuschmelzenden Flachkabels vorgesehen werden, die genügend temperaturbeständig sind, um den Einschmelzvorgang unbeschadet zu überstehen. Andere empfindlichere elektronische Bauteile wie z.B. Mikrochips zur Steuerung werden besser an den überstehenden Enden des Flachkabels befestigt, die dann weiters mit der Stromversorgung verbunden sind.

Weiters sind in Fig. 6 noch Löcher oder Durchbrechungen 20 zu sehen. Diese werden im vorbereitenden Verfahren eingestanzt und dienen dazu, das Flachkabel in richtiger Lage in die Spritzgussform einlegen und auf Dornen fixieren zu können. Wenn die Spritzgussform bewegbare solche Dorne aufweist, können die Dorne in einem späteren Stadium des Spritzvorgangs zurückgezogen werden, sodass auch diese Löcher 20 von der Spritzgussmasse aufgefüllt werden, wenn dies optisch gewünscht wird.

Die Zahl der Stromleiter im Flachkabel kann den Notwendigkeiten angepasst sein. Grundsätzlich genügt für mehrere in Serie geschaltete LEDs ein einziger Stromleiter. In den meisten Fällen wird es sinnvoll sein, drei Leiterbahnen vorzusehen. Wenn in einem Leuchtobjekt verschiedene Gruppen von LEDs getrennt geschaltet werden sollen, z.B. solche mit verschiedenen Farben, dann wäre für jede Gruppe eine zusätzliche Leiterbahn vorzusehen.

Wie schon zuvor ausgeführt wurde, sind die Rückseite und Vorderseite des Leuchtobjekts entsprechend auszugestalten, damit es zu einer gleichmäßigen Lichtverteilung über die sichtbare Fläche des Leuchtobjektes kommt. Insbesondere bei der Ausbildung der Rückseite des Leuchtkörpers kann es vorteilhaft sein, dies mit einer entsprechend ausgebildeten Folie vorzunehmen, die mit dem Material des einzuspritzenden Kunststoffs verträglich ist. Dadurch ist es möglich, eine solche Folie in die Spritzgussform einzuziehen, das vorbereitete Flachkabel mit den darauf angeordneten elektronischen Bauteilen einzulegen und nach Schließen der Spritzgussform den Hinterspritzvorgang durchzuführen. Nach der Entnahme des Formlings ist die Rückseite bereits fertig ausgebildet.

Im Rahmen dieser Erfindung kann aber auch die Behandlung der Rückseite und jene der Vorderseite nach Entnahme des Spritzgussrohlings vorgenommen werden.

Wie schon zuvor ausgeführt, ist der Leuchtkörper an seiner Rückseite reflektierend ausgebildet, damit das Licht der LEDs in den Leuchtkörper reflektiert wird. Zur gleichmäßigen Ausleuchtung des Leuchtkörpers werden an der Rückseite Reflexionspunkte angeordnet, die hinsichtlich der Punktflächengrößen oder Variation der Häufigkeit der Punkte pro Flächenelement in Abhängigkeit von der Strahlrichtung und Entfernung von den LEDs derart variiert sind, dass der Leuchtkörper an seiner Vorderseite gleichmäßig oder gewünschtenfalls mit Flächenabschnitten größerer und kleinerer Lichtabstrahlung beleuchtbar ist.

Sehr schematisch ist die Anordnung in Fig. 7 dargestellt, wobei die Punktgrößen und deren Verteilung keinesfalls maßstäblich sind. Die Reflexionspunkte 21 können entweder im Druckverfahren z.B. mittels Siebdruck oder Tampondruck auf die Rückseite des Leuchtkörpers aufgebracht, oder mit einer diese Reflexionspunkte aufweisenden Folie aufgebracht werden. Die in Fig. 7 eingezeichneten drei LEDs 4, die auf dem Flachkabel 15 angeordnet sind, strahlen das Licht in einem Winkel nach unten, der von der Bauweise des LEDs abhängig ist. Auch bei breitstrahlenden LEDs kommt es zwischen den LEDs zu dunklen Zonen, wenn dem nicht entgegengewirkt wird. Weiters versteht es sich von selber, dass die Beleuchtungsstärke mit Zunahme der Entfernung der LEDs abnimmt, sodass ohne erfindungsgemäße Maßnahmen das Leuchtobjekt von den LEDs ausgehend immer schwächer beleuchtet ist und auch Zonen zwischen den LEDs dunkel bleiben.

Gemäß Erfindung wird die Punktflächengröße der Reflexionspunkte variiert, indem sie in den schwächer beleuchteten Flächen größer sind als in den stärker beleuchteten Flächengebieten. In Fig. 7 sind die Gradienten mit den Pfeilen 22, 23 eingezeichnet. Ausgehend von der direkten vertikal eingezeichneten Abstrahlrichtung des LEDs verläuft die Punktflächengröße entlang des Gradienten 22 ansteigend, das heißt die reflektierenden Punkte werden immer größer. In gleicher Weise steigt die Punktflächengröße im Nahbereich der LEDs und zwischen den LEDs nach dem Gradienten 23 an, bis zur Mittellinie zwischen den beiden benachbarten LEDs und nimmt dann wieder ab, da sich dann die Punkte wieder im Bereich der nächsten LED befinden.

Durch Variation der Punktflächengrößen ist es vor allem möglich, eine gleichmäßige Lichtverteilung zu erzielen. Allerdings kann es auch sinnvoll und gewünscht sein, an manchen Flächengebieten höhere Leuchteffekte herbeizuführen als an anderen Flächengebieten. All dies ist mit Variation der Punktflächengrößen möglich.

Anstelle der Variation der Punktflächengrößen ist es auch im Rahmen der Erfindung möglich, die Anzahl der Punkte pro Flächeneinheit zu variieren. Dabei ändert sich nicht die Flächengröße pro Punkt in einem vorgegebenen Raster, sondern es ändert sich die Zahl der Punkte pro Flächeneinheit.

Wenn hier von Reflexionspunkten oder reflektierenden Punkten die Rede ist, dann bedeutet dies nicht unbedingt runde Punkte, sondern es können Flächengebilde mit auch unregelmäßigen Umfängen gemeint sein, je nach Art und Weise der Herstellung dieser Punkte. Die Punktgrößen der Reflexionspunkte liegen bevorzugt zwischen 0,1 bis 1 mm und besonders bevorzugt zwischen 0,2 und 0,5 mm, bezogen auf runde Punkte.

Die Reflexionspunkte können auch dadurch hergestellt werden, dass die gesamte Rückseite vorerst als durchgehende Reflexionsfläche ausgebildet wird und dass die Punkte nur der Abschwächung der Reflexion dienen, dass also die Reflexionsflächen - hier als Reflexionspunkte bezeichnet - durch die Flächengebilde zwischen den Punkten definiert ist.

Es versteht sich von selbst, dass die reflektierenden Flächen, also die Reflexionspunkte, dazu dienen, das Licht in den Leuchtkörper zurückzustrahlen und somit das Entweichen durch die Flächen zu vermeiden.

Wie dann anhand der Fig. 8 noch erklärt wird, können derartige Anordnungen von Reflexionspunkten auch dazu herangezogen werden, die Abstrahlung des Lichtes durch die Vorderseite des Leuchtobjekts einerseits zu dämpfen und andererseits ebenfalls in den Leuchtkörper zu reflektieren, um das Licht im Leuchtkörper zu halten.

Die Vorderseite des Leuchtobjekts kann ohne Beschichtung oder weitere Bearbeitung nach dem Spritzgussvorgang belassen werden, wenn eine gleichmäßige Ausleuchtung genügt.

Bei Leuchtobjekten wie es z.B. KFZ-Kennzeichentafeln sind, sind die Anforderungen allerdings höher, da bei der gegebenen Dünnheit des Leuchtobjektes von etwa 1 bis 3 mm und Plattenhöhen in der Dimension von 20 cm und in Anbetracht der notwendigen Prägevorgänge dieser Platten die Lichtverteilung schwieriger ist. Weiters bestehen gesetzliche Vorschriften wie z.B. Oberflächen mit Retroreflexion, die eine entsprechende Reflexionseigenschaft bewirkt, wenn die Kennzeichentafel durch Fremdlicht angestrahlt wird. Weiters darf die Leuchtstärke der Kennzeichentafel nicht zu groß sein, damit das Kennzeichen nicht überstrahlt wird.

Fig. 8 zeigt ein bevorzugtes Ausführungsbeispiel im Schnitt.

Der Leuchtkörper 1 ist an seiner Rückseite mit der Rückenfolie 24 versehen, die die Reflexionspunkte 21 in gewünschter Anordnung und Graduierung aufweist. Am oberen Rand weist das Leuchtobjekt das Leuchtmittel 2 mit den LEDs 4 auf. Der Rand des Leuchtobjektes ist mit der Randabdeckung 25 abgedeckt, wobei die Randabdeckung auch reflektierend ausgebildet sein kann.

An der sichtseitigen Vorderfläche weist das Leuchtobjekt eine Diffusionsfolie 26 auf, die das aus dem Leuchtkörper 1 abstrahlende Licht streut und auch lichtdämpfende und lichtfärbende Eigenschaften aufweisen kann. Über der Diffusionsfolie 26 sitzt die vorgeschriebene retroreflektierende Schicht 27, die hier als durchgehende Folie dargestellt ist und in sich ebenfalls Reflexionspunkte 28 trägt, die einen Teil des nach vorne abstrahlenden Lichtes wieder in den Leuchtkörper 1 reflektieren. Diese Reflexionspunkte 28 dienen also sowohl zur gleichmäßigeren Verteilung des Lichtes, als auch zur Dämpfung des nach vorne abgestrahlten Lichtes.

Über der retroreflektierenden Schicht 27 ist schematisch noch der aufgeklebte oder aufgedruckte Zeichenbestandteil 29 des Kennzeichens eingezeichnet. Dabei kann es sich um Buchstaben, Ziffern oder andere Kennzeichenbestandteile handeln, die üblicherweise nicht lichtdurchlässig sind.

Wenn vorstehend die Leuchtkörper plattenförmig bezeichnet werden, dann bedeutet dies nicht, dass diese eine durchgehend gleiche Dicke aufweisen müssen. Die Dicke kann variieren. Die Begriffe Vorderseite und Rückseite sind funktionell zu verstehen. Als Vorderseite ist jene Fläche zu verstehen, die das Licht definiert abstrahlt und kann auch eine Teilfläche eines Objektes sein. Demgegenüber liegt die Rückseite der Vorderseite gegenüber.

Die Reflexionspunkte bestehen aus reflektierendem Material und Farbe, z.B. aus hellen oder spiegelnden Farbstoffen oder Folienabschnitten.

Die Fig. 9 und 10 zeigen einen vertikalen Schnitt durch den oberen Teil einer KFZ Nummerntafel. Diese weist am oberen Rand einen Randwulst 29 auf, in dem das Leuchtmittel 2 angeordnet ist. Gemäß Fig. 9 kann eine LED 4 mit seitlicher Lichtabstrahlung und gemäß Fig. 10 die etwas billigere Variante einer LED 4 mit senkrechter Abstrahlung zum Einsatz kommen. Somit kann der Randwulst bereits werkseitig hergestellt werden, wobei die übrige Fläche der Tafel eben ist.

Beim Kaltprägen der Nummerntafel in der KFZ-Zulassungsstelle kann der flache Teil mit den jeweiligen Prägungen für die Ziffern und Buchstaben 12 versehen werden, ohne das Leuchtmittel 2 der Gefahr der Beschädigung auszusetzen. Der Randwulst 29 dient sowohl der Versteifung der Tafel als auch deren Befestigung mit einem umlaufenden Rahmen oder mit Klammern. Die Beschichtung der Vorderfläche 7 und jene der Rückseite mit einer Rückenfolie 24 kann vorgenommen werden, wie zuvor beschrieben.

Die Anordnung des Leuchtmittels 2 im Randwulst 29 bringt auch den Vorteil mit sich, dass die gesamte sichtbare Fläche der Tafel beleuchtet ist. Wenn der Randwulst erst nachträglich geprägt wird - wie dies bei Blech-Nummerntafeln üblich ist - müsste das Leuchtmittel weiter unten im ungeprägten flachen Abschnitt der Tafel angeordnet werden, wo ein dunkler Bereich entstehen würde.

Der Randwulst kann das Leuchtobjekt in Form der Tafel allseitig umrahmen, aber auch nur in Abschnitten vorgesehen sein. Er kann an der Oberfläche die unbehandelte Fläche des Leuchtkörpers aufweisen oder mit Folie oder Lack überzogen sein.

### Bezugszeichenliste

1. Leuchtkörper
2. Leuchtmittel
3. Stromleiter
4. LED
5. Lichtstrahlen
6. Spiegelschicht
7. Vorderfläche
8. Diffusionsschicht
9. Reflexionsschicht
10. Einkerbung
11. Retroreflexionsschicht
12. Ziffern + Buchstaben
13. obere Kante
14. Stromleiter (14 a, b, c)
15. Flachkabel
16. Isolator
17. Auftrennung
18. Leiterbrücke
19. Kondensator
20. Löcher
21. Reflexionspunkt
22. Gradient
23. Gradient
24. Rückenfolie
25. Randabdeckung
26. Diffusionsfolie
27. Retroreflektierende Schicht
28. vordere Reflexionspunkte
29. Randwulst

## Patentansprüche

1. Leuchtobjekt mit einem von einer oder mehreren in Serie oder parallel geschalteten LEDs (4) gebildeten Leuchtmittel (2), wobei die LEDs auf wenigstens einem Stromleiter (3, 14) angeordnet sind, und ein Leuchtkörper (1) vorgesehen ist, und der Leuchtkörper an seiner Rückseite reflektierend ist sodass das Licht der LEDs in den Leuchtkörper reflektiert wird, wobei zur gleichmäßigen Ausleuchtung des Leuchtkörpers (1) Reflexionspunkte (21) vorgesehen sind, die hinsichtlich der Punktflächengrößen oder Variation der Häufigkeit der Punkte pro Flächenelement in Abhängigkeit von der Strahlrichtung und Entfernung von dem(n) LED(s) (4) derart variiert sind, dass der Leuchtkörper (1) an seiner Vorderseite gleichmäßig oder gewünschtenfalls mit Flächenabschnitten größerer und kleinerer Lichtabstrahlung beleuchtbar ist, **dadurch gekennzeichnet, dass** der Leuchtkörper (1) plattenförmig ist und die LEDs mit dem Stromleiter in den Leuchtkörper (1) aus Kunststoff eingeschmolzen sind und an seiner Rückseite Reflexionspunkte (21) aufweist, die auf einer Rückenfolie (24) angeordnet sind, die auf der Rückseite des Leuchtkörpers angeordnet und fixiert ist.

2. Leuchtobjekt nach Anspruch 1, **dadurch gekennzeichnet, dass** die Reflexionspunkte (21) durch Druckverfahren auf die Rückseite des Leuchtkörpers (1) aufgedruckt sind.

3. Leuchtobjekt nach einem der Ansprüche 1 bis 2, **dadurch gekennzeichnet, dass** die Reflexionspunkte (21) eine Punktgröße zwischen 0,1 bis 1 mm, bevorzugt zwischen 0,2 und 0,5 mm aufweisen.

4. Leuchtobjekt nach einem der Ansprüche 1 bis 3, **dadurch gekennzeichnet, dass** die Vorderseite des Leuchtkörpers (1) zumindest abschnittweise mit vorderen Reflexionspunkten (28) versehen ist, deren Anordnung entsprechend der gewünschten nach vorne abgestrahlten Leuchtstärke dichter oder weniger dicht ausgebildet ist.

5. Leuchtobjekt nach einem der Ansprüche 1 bis 4, **dadurch gekennzeichnet, dass** die vorderen Reflexionspunkte (28) auf der Vorderseite des Leuchtkörpers (1) durch Druckverfahren aufgebracht oder Bestandteil einer auf der Vorderseite angeordneten als Frontfolie dienende Folienschicht, bevorzugt einer retroreflektierenden Folie (27), sind.

6. Leuchtobjekt nach einem der Ansprüche 1 bis 5, **dadurch gekennzeichnet, dass** zwischen Frontfolie (27) und Leuchtkörper (1) eine das Licht streuende Diffusionsfolie (26) angeordnet ist.

7. Leuchtobjekt nach einem der Ansprüche 1 bis 6, **dadurch gekennzeichnet, dass** die Frontfolie (27) an der Vorderseite eine Folie oder Ausrüstung mit Rückstrahleffekt, bevorzugt eine Retroreflexionsfolie aufweist.

8. Leuchtobjekt nach einem der Ansprüche 1 bis 7, **dadurch gekennzeichnet, dass** der Leuchtkörper lichtlenkende oder lichtbrechende Flächenelemente (10) oder Partikel enthält.

9. Leuchtobjekt nach einem der Ansprüche 1 bis 8, **dadurch gekennzeichnet, dass** die Vorderseite der Frontfolie (27) mit graphischen Zeichen (27), Mustern oder Flächeneffekten versehen ist.

10. Leuchtobjekt nach einem der Ansprüche 1 bis 9, **dadurch gekennzeichnet, dass** die Ränder, Kanten und/oder Übergangsflächen zwischen Vorderseite und Rückseite des Leuchtobjekts eine Randabdeckung (25) aufweisen, die lichtundurchlässig und bevorzugt in den Leuchtkörper reflektierend ausgebildet ist.

11. Leuchtobjekt nach einem oder mehreren der Ansprüche 1 bis 10, **dadurch gekennzeichnet, dass** der Stromleiter bevorzugt ein zwei- oder dreiädriges Flachkabel (15) ist, auf oder zwischen dessen Stromleitern (14) die LEDs (4) befestigt und kontaktiert sind und das Flachkabel (15) als Isolator (16) und Kabelkörper einen Kunststoff umfasst, der mit dem Kunststoff des Leuchtkörpers kompatibel ist.

12. Leuchtobjekt nach Anspruch 11, **dadurch gekennzeichnet, dass** ein oder beide Enden des Flachkabels (15) mit Stecker versehen und aus dem Leuchtkörper herausgeführt ist/ sind.

13. Leuchtobjekt nach einem der Ansprüche 11 oder 12, **dadurch gekennzeichnet, dass** das Leuchtmittel (2) mit dem Flachkabel (15) in den Leuchtkörper mittels Spritzguss zumindest teilweise eingeschmolzen ist.

14. Leuchtobjekt nach Anspruch 13, **dadurch gekennzeichnet, dass** das Leuchtmittel (2) die LEDs (4) nur auf einer Seite des Flachkabels angeordnet hat und dass der Leuchtkörper auf im wesentlichen dieser Seite aufgeschmolzen ist, und dass die andere Seite des Flachkabels weitgehend frei von aufgeschmolzenem Kunststoff ist, sodass die LEDs (4) allseitig im Leuchtkörper (1) eingeschmolzen und auf einer Seite durch das Flachkabel (15) abgedeckt sind.

15. Leuchtobjekt nach einem der Ansprüche 11 bis 12, **dadurch gekennzeichnet, dass** der Leuchtkörper (1) als Platte dreidimensional verformbar ist und dass das Leuchtmittel (2) in einem nicht verformten oder nicht verformbaren Flächenabschnitt des Leuchtkörpers (1) angeordnet ist.

16. Leuchtobjekt nach einem der Ansprüche 1 bis 15, **dadurch gekennzeichnet, dass** das Leuchtobjekt eine von innen beleuchtete KFZ Nummerntafel oder ein Anzeigeschild ist.

17. Leuchtobjekt nach einem der Ansprüche 1 bis 16, **dadurch gekennzeichnet, dass** die LEDs (4) verschieden gefärbtes Licht abstrahlen und jede Farbe getrennt ansteuerbar ist.

18. Leuchtobjekt nach einem der Ansprüche 11 bis 17, **dadurch gekennzeichnet, dass** auf dem Flachkabel (15) zusätzlich zu den LEDs (4) weitere elektronische Bauteile (18, 19), zur Kontaktierung der Stromleiter oder zur Steuerung des Betriebes des Leuchtobjektes angeordnet und in den Leuchtkörper eingeschmolzen sind.

19. Leuchtobjekt nach einem der Ansprüche 16 bis 18 in Form einer KFZ-Nummerntafel oder eines Anzeigeschildes, **dadurch gekennzeichnet, dass** das Leuchtobjekt einen Rand aufweist, der zumindest abschnittweise mit einem Randwulst (29) versehen ist, und dass das Leuchtmittel in diesem Randwulst angeordnet ist.

20. Verfahren zur Herstellung eines Leuchtobjektes nach einem der Ansprüche 1 bis 19, wobei das vorgefertigte und mit den LEDs und gegebenenfalls weiteren elektronischen Bauteilen bestückte Leuchtmittel (2) in eine entsprechend vertiefte Spritzgussform eingelegt, mit Haltestiften, die gewünschtenfalls beim Einspritzen des Kunststoffes aus dem Formhohlraum rückziehbar sind, fixiert und nach Schließen der Form mit dem Kunststoff hinterspritzt werden, **dadurch gekennzeichnet, dass** zur Ausbildung der Rückseite die mit den Reflexionspunkten versehene Rückenfolie (24) entweder vor Einlegen des Leuchtmittels in die Spritzgussform eingebracht, oder nach Entnahme des Spritzgussrohlings an der Rückseite des Leuchtobjekts angeordnet wird.

## Claims

1. A lighting object having an illuminant (2) formed from one or a plurality of LEDs (4) connected in series or parallel, wherein the LEDs are arranged on at least one conductor (3, 14), and a lighting body (1) is provided, and the lighting body is reflective on its rear side, so that the light of the LEDs is reflected into the lighting body, wherein reflection points (21) are provided for uniform illumination of the lighting body (1), which reflection points are varied with regards to the point area sizes or variation of the incidence of the points per area element as a function of the beam direction and distance from the LED(s) (4) such that the lighting body (1) can be lit up on its front side uniformly or, if desired, with area sections of greater and lesser light emission, **characterised in that** the lighting body (1) is plate-shaped, and the LEDs with the conductor are sealed into the lighting body (1) made from plastic, and has reflection points (21) on its rear side, which are arranged on a rear film (24), which is arranged and fixed on the rear side of the lighting body.

2. The lighting object according to Claim 1, **characterised in that** the reflection points (21) are printed onto the rear side of the lighting body (1) by means of printing methods.

3. The lighting object according to one of Claims 1 to 2, **characterised in that** the reflection points (21) have a point size between 0.1 to 1 mm, preferably between 0.2 and 0.5 mm.

4. The lighting object according to one of Claims 1 to 3, **characterised in that** the front side of the lighting body (1) is provided with front reflection points (28) at least in certain sections, the arrangement of which is constructed to be denser or less dense in accordance with the desired forwards-emitted light intensity.

5. The lighting object according to one of Claims 1 to 4, **characterised in that** the front reflection points (28) are applied on the front side of the lighting body (1) by means of printing methods or are a constituent of a film layer, preferably a retroreflective film (27), arranged on the front side and used as front film.

6. The lighting object according to one of Claims 1 to 5, **characterised in that** a diffusion film (26) scattering the light is arranged between front film (27) and lighting body (1).

7. The lighting object according to one of Claims 1 to 6, **characterised in that** the front film (27) has a film or equipment with a reflective effect, preferably a retroreflective film, on the front side.

8. The lighting object according to one of Claims 1 to 7, **characterised in that** the lighting body contains light-directing or refractive surface elements (10) or particles.

9. The lighting object according to one of Claims 1 to 8, **characterised in that** the front side of the front film (27) is provided with graphical characters (27), patterns or surface effects.

10. The lighting object according to one of Claims 1 to 9, **characterised in that** the edges, borders and/or transition surfaces between front side and rear side of the lighting object have an edge cover (25), which is constructed to be opaque and preferably reflective into the lighting body.

11. The lighting object according to one or more of Claims 1 to 10, **characterised in that** the conductor is preferably a two- or three-wire flat cable (15), on or between the conductors (14) of which the LEDs (4) are fastened and contacted and the flat cable (15) comprises a plastic as insulator (16) and cable body, which plastic is compatible with the plastic of the lighting body.

12. The lighting object according to Claim 11, **characterised in that** one or both ends of the flat cable (15) is/are provided with a plug and guided out of the lighting body.

13. The lighting object according to one of Claims 11 or 12, **characterised in that** the illuminant (2) with the flat cable (15) is sealed into the lighting body at least to some extent by means of injection moulding.

14. The lighting object according to Claim 13, **characterised in that** the illuminant (2) only has the LEDs (4) arranged on one side of the flat cable and **in that** the lighting body is melted substantially on this side, and **in that** the other side of the flat cable is substantially free from fused plastic, so that the LEDs (4) are entirely sealed in the lighting body (1) and covered on one side by the flat cable (15).

15. The lighting object according to one of Claims 11 to 12, **characterised in that** the lighting body (1) is three-dimensionally deformable as a plate and **in that** the illuminant (2) is arranged in a non-deformed or non-deformable area section of the lighting body (1).

16. The lighting object according to one of Claims 1 to 15, **characterised in that** the lighting object is a motor vehicle numberplate or a message sign.

17. The lighting object according to one of Claims 1 to 16, **characterised in that** the LEDs (4) emit variously coloured light and each colour can be controlled separately.

18. The lighting object according to one of Claims 11 to 17, **characterised in that** in addition to the LEDs (4), further electronic components (18, 19) for contacting the conductor or for controlling the operation of the lighting object are arranged on the flat cable (15) and sealed into the lighting body.

19. The lighting object according to one of Claims 16 to 18 in the form of a motor vehicle numberplate or a message sign, **characterised in that** the lighting object has an edge which is provided with an edge bead (29) at least in certain sections, and **in that** the illuminant is arranged in this edge bead.

20. A method for producing a lighting object according to one of Claims 1 to 19, wherein the preassembled illuminant (2), which is equipped with the LEDs and, if appropriate, further electronic components, is inserted into a correspondingly recessed injection mould, fixed using retaining pins, which can be retracted out of the mould cavity if desired when injecting the plastic, and back moulded with the plastic after the closing of the mould, **characterised in that**, to form the rear side, the rear film (24) provided with the reflection points is either introduced before the insertion of the illuminant into the injection mould or arranged on the rear side of the lighting object after removal of the injection-moulded blank.

## Revendications

1. Objet lumineux comportant un moyen lumineux (2) formé par une ou plusieurs LEDs (4) branchées en série ou en parallèle, dans lequel les LEDs sont disposées sur au moins un conducteur de courant (3, 14) et un corps lumineux (1) est prévu et le corps lumineux est réfléchissant sur son côté arrière de telle sorte que la lumière des LEDs soit réfléchie dans le corps réfléchissant, dans lequel afin d'illuminer uniformément le corps lumineux (1) des points de réflexion (21) sont prévus, qui sont variés en ce qui concerne les grandeurs de surfaces de points ou la variation de la fréquence des points par élément de surface en fonction de la direction du rayon et l'éloignement par rapport à (aux) LED(s) (4), de telle sorte que le corps lumineux (1) puisse être illuminé sur son côté avant uniformément ou si souhaité avec des portions de surface à émission de lumière plus grande et plus petite, **caractérisé en ce que** le corps lumineux (1) est en forme de plaque et les LEDs sont moulées avec le conducteur de courant dans le corps lumineux (1) en plastique et qui présente sur son côté arrière des points de réflexion (21), qui sont disposés sur un film arrière (24), qui est disposé et fixé sur le côté arrière du corps lumineux.

2. Objet lumineux selon la revendication 1, **caractérisé en ce que** les points de réflexion (21) sont imprimés par un procédé d'impression sur le côté arrière du corps lumineux (1).

3. Objet lumineux selon une des revendications 1 à 2, **caractérisé en ce que** les points de réflexion (21) présentent une grandeur de point comprise entre 0,1 et 1 mm, de préférence entre 0,2 et 0,5 mm.

4. Objet lumineux selon une des revendications 1 à 3, **caractérisée en ce que** le côté avant du corps lumineux (1) est pourvue au moins sur des portions de points de réflexion avant (28), dont la disposition est conçue de manière plus ou moins étanche de manière correspondante à l'intensité lumineuse émise par l'avant souhaitée.

5. Objet lumineux selon une des revendications 1 à 4, **caractérisé en ce que** les points de réflexion avant (28) sont montés sur le côté avant du corps lumineux (1) par un procédé d'impression ou sont parties intégrantes d'une couche de film servant de film avant disposée sur le côté avant, de préférence d'un film rétro réfléchissant (27).

6. Objet lumineux selon une des revendications 1 à 5, **caractérisé en ce que** entre le film avant (27) et le corps lumineux (1) un film de diffusion (26) diffusant la lumière est disposé.

7. Objet lumineux selon une des revendications 1 à 6, **caractérisé en ce que** le film avant (27) présente sur le côté avant un film ou un équipement avec effet de rétro réflexion, de préférence un film de rétro réflexion.

8. Objet lumineux selon une des revendications 1 à 7, **caractérisé en ce que** le corps lumineux contient des éléments de surface (10) ou des particules guidant la lumière ou interrompant la lumière.

9. Objet lumineux selon une des revendications 1 à 8, **caractérisé en ce que** le côté avant du film avant (27) est pourvu de dessins graphiques (27), de motifs ou d'effets de surface.

10. Objet lumineux selon une des revendications 1 à 9, **caractérisé en ce que** les bords, les arêtes et/ou les surfaces de transition entre le côté avant et le côté arrière de l'objet lumineux présentent un recouvrement de bord (25), qui est imperméable à la lumière et est conçu de préférence de manière réfléchissante dans le corps lumineux.

11. Objet lumineux selon une ou plusieurs des revendications 1 à 10, **caractérisé en ce que** le conducteur de courant est de préférence un câble plat (15) à deux ou trois fils, conducteurs de courant (14) sur ou entre lesquels les LEDs (4) sont fixées et contactées et le câble plat (15) prend comme isolant (16) et corps de câble un plastique, qui est compatible avec le plastique du corps lumineux.

12. Objet lumineux selon la revendication 11, **caractérisé en ce que** une ou plusieurs extrémités du câble plat (15) est/sont pourvues de connecteur et réalisées à partir du corps lumineux.

13. Objet lumineux selon une des revendications 11 ou 12, **caractérisé en ce que** le moyen lumineux (2) est moulé au moins partiellement avec le câble plat (15) dans le corps lumineux au moyen d'un moulage par injection.

14. Objet lumineux selon la revendication 13, **caractérisé en ce que** sur le moyen lumineux (2) les LEDs (4) sont disposés seulement sur un côté du câble plat et le corps lumineux est moulé essentiellement sur ce côté et **en ce que** l'autre côté du câble plat est essentiellement exempt de plastique moulé, de sorte que les LEDs (4) soient moulées de tous les côtés dans le corps lumineux (1) et soient couvertes sur un côté par le câble plat (15).

15. Objet lumineux selon une des revendications 11 à 12, **caractérisé en ce que** le corps lumineux (1) peut être déformé comme une plaque en trois dimensions et **en ce que** le moyen lumineux (2) est disposé dans une portion de surface du corps lumineux (1) non déformée ou non déformable.

16. Objet lumineux selon une des revendications 1 à 15, **caractérisé en ce que** l'objet lumineux est une plaque d'immatriculation des véhicule illuminée de l'intérieur ou un panneau d'affichage.

17. Objet lumineux selon une des revendications 1 à 16, **caractérisé en ce que** les LEDs (4) émettent une lumière colorée différemment et chaque couleur peut être commandée séparément.

18. Objet lumineux selon une des revendications 11 à 17, **caractérisé en ce que** sur le câble plat (15) en plus des LEDs (4) des composants électroniques supplémentaires (18, 19) pour contacter le conducteur de courant ou pour commander le fonctionnement de l'objet lumineux sont disposés et sont moulés dans le corps lumineux.

19. Objet lumineux selon une des revendications 16 à 18, sous la forme d'une plaque d'immatriculation de véhicule ou d'un panneau d'affichage, **caractérisé en ce que** l'objet lumineux présente un bord, qui est pourvu au moins par portions d'un bourrelet de bord (29) et **en ce que** le moyen lumineux est disposé dans ce bourrelet de bord.

20. Procédé de fabrication d'un objet lumineux selon une des revendications 1 à 19, dans lequel le moyen lumineux (2) préfabriqué et équipé de LEDs et le cas échéant de composants électroniques supplémentaires et placé dans un moule de moulage par injection évidé de manière correspondante, avec des goupilles de retenue, qui si souhaité peuvent être retirées lors de l'injection du plastique hors de l'espace creux du moule, fixé et après la fermeture du moule injecté avec du plastique, **caractérisé en ce que** pour réaliser le côté arrière le film arrière (24) pourvu des points de réflexion est disposé soit avant la pose du moyen lumineux dans le moule de moulage par injection, soit après le retrait de l'ébauche de moulage par injection sur le côté arrière de l'objet lumineux.
